(19) Europäisches Patentamt / European Patent Office / Office européen des brevets

(11) EP 3 530 439 A1

(12) EUROPEAN PATENT APPLICATION
published in accordance with Art. 153(4) EPC

(43) Date of publication:
28.08.2019 Bulletin 2019/35

(51) Int Cl.:
B29C 64/307 (2017.01)    B33Y 40/00 (2015.01)

(21) Application number: 17861849.2

(22) Date of filing: 13.10.2017

(86) International application number:
PCT/JP2017/037241

(87) International publication number:
WO 2018/074373 (26.04.2018 Gazette 2018/17)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 19.10.2016 JP 2016204840

(71) Applicant: Daicel Corporation
Osaka-shi, Osaka 530-0011 (JP)

(72) Inventors:
• HIRAMURA, Takahiro
  Tokyo 108-8230 (JP)
• EGAWA, Yuichiro
  Tokyo 108-8230 (JP)

(74) Representative: Grünecker Patent- und
Rechtsanwälte
PartG mbB
Leopoldstraße 4
80802 München (DE)

(54) **THREE-DIMENSIONAL MOLDING COMPOSITION, METHOD FOR PRODUCING THREE-DIMENSIONAL MOLDED ARTICLE, AND THREE-DIMENSIONAL MOLDED ARTICLE**

(57) The present invention is to provide a three-dimensional molding composition that is suitable for efficiently producing a three-dimensional molded article excellent in shape accuracy, with a few steps.

The three-dimensional molding composition of the present invention includes a fibrous substance as a constituent component, wherein a TI value [viscosity at 6 rpm/viscosity at 60 rpm] at 20°C is 1.5 or more. It is preferable for the above described fibrous substance to be cellulose, and is particularly preferable to be cellulose of which an average degree of unsubstitution of hydroxyl groups is 2.5 or more. In addition, it is preferable that an average length of the fibrous substance be 1 to 1,000 $\mu$m and that an average aspect ratio thereof be 10 to 10,000.

## Description

Technical field

The present invention relates to a three-dimensional molding composition, a method for producing a three-dimensional molded article using the three-dimensional molding composition, and a three-dimensional molded article. The present application claims the priority of Japanese Patent Application No. 2016-204840 filed on October 19 in 2016, the content of which is incorporated herein by reference.

Background Art

A technology of molding a three-dimensional molded article in each layer is known.

For example, Patent Literature 1 describes a method of forming a three-dimensional structure through: a step (1) of applying a molding material (containing particulate substance such as polymer powder, metal powder and ceramic powder, and a binding agent (thermally polymerizable or photopolymerizable compound)), which has been diluted with a solvent, and forming a thin layer; a step (2) of evaporating the solvent in the above described thin layer; a step (3) of selectively curing a predetermined portion of the thin layer and forming a thin plate layer; and a step (4) of repeating the above described steps (1) to (3) on the thin plate layer.

In addition, Patent Literature 2 describes a method of: using a cellulose at least a part of which forms a sodium salt, as a particulate substance; applying a composition obtained by suspending the cellulose in water, with a squeegee, and forming a thin layer; removing the solvent; then selectively applying a photocurable composition of a binding agent, onto a portion which is desired to be cured; irradiating the portion with ultraviolet rays to cure the photocurable composition; repeating the above steps; and thereby obtaining a three-dimensional molded article.

Citation List

Patent Literature

> Patent Literature 1: Japanese Patent Laid-Open No. 2003-053847
> Patent Literature 2: Japanese Patent Laid-Open No. 2015-212060

Disclosure of the invention

Technical Problem

However, the method of molding the three-dimensional molded article in each layer includes selectively curing the predetermined portion of the thin layer, and removing an uncured molding material to form the three-dimensional molded article; accordingly, removes the large amount of the molding material depending on the shape and the size of the three-dimensional molded article, and disposes the material with a high rate (or uses material with low efficiency); and there has been the following problem: the cost increases. In addition, the method molds the three-dimensional molded article in each layer, and accordingly it has been also the following problem: the operation takes too much time if the number of laminated layers becomes large, and the efficiency is poor.

Accordingly, an object of the present invention is to provide a three-dimensional molding composition that is suitable for efficiently producing a three-dimensional molded article excellent in shape accuracy, with a few steps.

Another object of the present invention is to provide a three-dimensional molding composition that is suitable for efficiently producing a three-dimensional molded article excellent in shape accuracy and mechanical strength, with a few steps.

Another object of the present invention is to provide a method for efficiently producing a three-dimensional molded article excellent in shape accuracy with the use of the above described three-dimensional molding composition, with a few steps.

Another object of the present invention is to provide a three-dimensional molded article that is formed of a solidified product of the three-dimensional molding composition and is excellent in shape accuracy.

Solution to Problem

In order to solve the above described problems, the present inventors have made an extensive investigation, and as a result, have found out that a three-dimensional molding composition which contains a fibrous substance and has high thixotropy lowers its viscosity by an external force (for example, shear stress) which has been applied thereto, exhibits excellent fluidity, and accordingly shows adequate discharge properties when having been used in a discharge device or the like, that after the composition has been discharged, the application of the external force vanishes, thereby the viscosity suddenly increases, the shape of the discharged composition is retained without being deformed, and that if the composition is discharged into a desired three-dimensional shape and is solidified, a three-dimensional molded article excellent in shape accuracy can be formed even without adopting a method for producing a three-dimensional molded article by molding a composition in each layer and adhering the layers to each other while using a binding agent; and have accomplished the present invention.

Specifically, the present invention provides a three-dimensional molding composition that contains a fibrous substance as a constituent component, wherein a TI value [viscosity at 6 rpm/viscosity at 60 rpm] at 20°C is 1.5 or more.

The present invention also provides the three-dimensional molding composition, wherein the fibrous substance is cellulose.

The present invention also provides the three-dimensional molding composition, wherein the fibrous substance is cellulose of which an average degree of unsubstitution of hydroxyl groups is 2.5 or more.

The present invention also provides the three-dimensional molding composition, wherein an average length of the fibrous substance is 1 to 1.000 $\mu$m and an average aspect ratio thereof is 10 to 10,000.

The present invention also provides the three-dimensional molding composition that further contains a solvent as a constituent component, wherein the sum of the content of the fibrous substance and the content of the solvent is 70 wt% or more of the total amount of the three-dimensional molding composition, and a content of the fibrous substance is 15 to 50 wt% of the total amount of the three-dimensional molding composition.

The present invention also provides the three-dimensional molding composition, wherein the content of the fibrous substance based on the total solid component contained in the three-dimensional molding composition is 90 wt% or more.

The present invention also provides a three-dimensional molding composition that contains cellulose as a constituent component, wherein an average degree of unsubstitution of hydroxyl groups in the cellulose is 2.5 or more.

The present invention also provides a method for producing a three-dimensional molded article, including: discharging the three-dimensional molding composition into a three-dimensional shape by using a discharge device; and then solidifying the discharged three-dimensional molding composition to thereby produce the three-dimensional molded article.

The present invention also provides a three-dimensional molded article that is formed of a solidified product of the three-dimensional molding composition.

Advantageous Effect of Invention

The three-dimensional molding composition of the present invention (hereinafter occasionally referred to as "composition") shows high thixotropy, and accordingly can be discharged into a shape of a desired three-dimensional molded article with the use of the discharge device or the like, and if the discharged composition is solidified, the three-dimensional molded article can be accurately produced. Specifically, the three-dimensional molded article can be produced by simple and a few steps of discharge and solidification, and there is no need to adopt the method of producing a three-dimensional molded article by molding the three-dimensional molded article in each layer and adhering the layers to each other by using a binding agent. In addition, the composition of the present invention can be discharged into the shape of the desired three-dimensional molded article with the use of a discharge device, and accordingly the composition can be effectively utilized without waste. Because of this, the cost can be suppressed to a minimum.

In addition, if the cellulose (particularly, hydroxyl-rich cellulose) is used as the fibrous substance, the three-dimensional molded article can be obtained which is lightweight, is excellent in mechanical strength, and is excellent in terms of resource, environment and safety.

Description of Embodiment

[Three-dimensional molding composition]

The three-dimensional molding composition of the present invention is a three-dimensional molding composition that is used for the application of producing a three-dimensional molded article (in other words, three-dimensional structure); and
the first aspect includes a fibrous substance as a constituent component, wherein a TI value [viscosity at 6 rpm/viscosity at 60 rpm] at 20°C is 1.5 or more.

The second aspect includes cellulose as a constituent component, wherein an average degree of unsubstitution of hydroxyl groups in the cellulose is 2.5 or more.

The composition of the present invention contains a fibrous substance, and shows water retentivity, shape retainability and high thixotropy due to a phenomena in which the fibrous substances are entangled to form a three-dimensional network structure, and that much solvent is restrained in spaces of the three-dimensional network structure by a capillary phenomenon.

The thixotropy index (TI value at 20°C) of the composition of the present invention, which is calculated by the following expression (1), is 1.5 or more (for example, being 1.5 to 300, preferably being 1.5 to 200, more preferably being 1.5 to 100, further preferably being 1.5 to 50, further preferably being 2 to 30, particularly preferably being 2 to 20, most preferably being 3 to 10, and especially preferably being 4 to 8). Because of this, when the composition has been discharged from a discharge device, a shear stress is applied, thereby a three-dimensional network structure of the fibrous substance is destroyed, or an orientation direction thereof is straightened to lower the viscosity and enhance the fluidity; and accordingly the composition can exhibit adequate discharge properties. In addition, after the composition has been discharged, the fibrous substance forms a three-dimensional network structure again because the application of the shear stress vanishes, accordingly the viscosity suddenly increases, and the composition can exhibit excellent shape retention properties.

$$\text{TI value} = \text{viscosity at 6 rpm/viscosity at 60 rpm}$$

(1)

In addition, when the composition of the present invention is an aqueous dispersion of which the content of the fibrous substance is 1 wt%, the thixotropy index (TI value at 20°C) is, for example, 1.5 or more (preferably being 1.5 to 50, more preferably being 2 to 30, particularly preferably being 2 to 20, most preferably being 3 to 10, and especially preferably being 4 to 8).

Incidentally, the viscosity at the numbers of revolutions of 6 rpm and 60 rpm at 20°C can be measured with the use of a rotary viscometer (HAAKE).

Examples of the above described fibrous substances include: polysaccharides such as cellulose, amylose and xylose, derivatives of polysaccharides, polysaccharides which have formed salts, derivatives of polysaccharides which have formed salts; resins such as polyethylene, polypropylene, polyester and nylon; carbon fibers; aramid fibers; and glass fibers. These substances can be used singly or in combinations of two or more. The composition of the present invention contains a fibrous substance, and accordingly can provide a three-dimensional molded article excellent in mechanical strength and dimensional accuracy, by being solidified.

Among the above described fibrous substances, the polysaccharides are preferable, and the cellulose is particularly preferable. Among the celluloses, hydroxyl-rich celluloses are especially preferable of which an average degree of unsubstitution of the hydroxyl groups is 2.5 or more, in a point that the composition can drastically enhance the mechanical strength of the three-dimensional molded article to be obtained.

The average degree of unsubstitution of the hydroxyl groups in the hydroxyl-rich cellulose is 2.5 or more, and is preferably 2.6 or more, is particularly preferably 2.7 or more, and is most preferably 2.8 or more, in a point that the composition can drastically enhance the mechanical strength of the obtained three-dimensional molded article. Incidentally, the upper limit is 3.0.

The cellulose of which the average degree of unsubstitution of the hydroxyl groups is 2.5 or more is a cellulose of which the degree of substitution of the hydroxyl group is low and the average degree of substitution of the hydroxyl groups is, for example, less than 1, is preferably 0.5 or less, is particularly preferably 0.3 or less, and is most preferably 0.2 or less.

Incidentally, the cellulose has secondary hydroxyl groups which are bonded to carbon atoms at position 2 and position 3 of the glucose, respectively, which is a constituent unit of the cellulose, and has a primary hydroxyl group which is bonded to a carbon atom at position 6 thereof. In addition, the degree of substitution of the hydroxyl group in the cellulose is indicated by the number of the substituted hydroxyl groups among the three hydroxyl groups that exist in the glucose which is the constituent unit of the cellulose, and the average degree of substitution is the average value thereof. In addition, the degree of unsubstitution of the hydroxyl group in the cellulose is indicated by the number of the unsubstituted hydroxyl groups among the three hydroxyl groups that exist in the glucose which is the constituent unit of the cellulose, and the average degree of unsubstitution is the average value thereof.

The average degree of unsubstitution of the hydroxyl groups in the cellulose can be calculated, for example, from the following expression (2).

$$\text{Average degree of unsubstitution} = 3.0 - \text{(average degree of substitution of hydroxyl groups in cellulose)} \quad (2)$$

In the above described hydroxyl-rich cellulose, a part thereof may form a salt, within a range in which the average degree of unsubstitution of the hydroxyl groups becomes the above described value. The cellulose of which a part of the hydroxyl groups forms a salt can make the dispersibility of the cellulose in the composition excellent, in some cases, and can make the mechanical strength and dimensional accuracy of the three-dimensional molded article to be obtained excellent, in some cases. Examples of types of salts, when a part of the hydroxyl groups of the cellulose forms the salt, include a sodium salt, a potassium salt, a lithium salt, a magnesium salt, a calcium salt and an ammonium salt.

In addition, as for the above described hydroxyl-rich cellulose, a part thereof may be chemically modified, within a range in which the average degree of unsubstitution of the hydroxyl groups becomes the above described value.

An average length (average length L) of the above described fibrous substances is not limited in particular, but is preferably 1 to 1,000 μm, is more preferably 50 to 1,000 μm, is further preferably 100 to 900 μm, and is particularly preferably 300 to 800 μm. When the average length L is within this range, the composition can make the mechanical strength and dimensional accuracy of the three-dimensional molded article to be obtained excellent, while preventing the scattering and local agglomeration of the above described fibrous substance.

An average thickness (average diameter D) of the above described fibrous substances is not limited in particular, but is preferably 1 to 3,000 nm, is more preferably 100 to 2,000 nm, is further preferably 500 to 1,500 nm, and is particularly preferably 800 to 1,500 nm. When the average diameter D is within this range, the composition exhibits particularly high thixotropy. In addition, the composition can make the mechanical strength and dimensional accuracy of the three-dimensional molded article to be obtained, while preventing the scattering and local agglomeration of the above described fibrous substance.

An average aspect ratio (average length/ average thickness) of the above described fibrous substances is not limited in particular, but is preferably 10 to 10,000, is more preferably 100 to 2,000, is further preferably 200 to 1,000, and is particularly preferably 300 to 800. When the average aspect is within this range, the composition can make the mechanical strength and dimensional accuracy of the three-dimensional molded article to be obtained excellent, while preventing the scattering and local agglomeration of the above described fibrous substance.

The above described fibrous substance may contain one or more impurities. (When fibrous substance is cellulose, examples of impurities include hemicellulose and lignin.)

As for the above described fibrous substance, for example, the cellulose can be produced by known methods such as pulverization, grinding, disintegration and explosion of raw material pulp.

Commercially available products, for example, such as Microfibrillated Cellulose "CELISH" (manufactured by Daicel FineChem Ltd.) and Microfibrillated Aramid "TIARA" (manufactured by Daicel FineChem, Ltd.) may be used as the above described fibrous substance.

It is preferable that the composition of the present invention contain cellulose (in particular, cellulose of which average degree of unsubstitution of hydroxyl groups is 2.5 or more) as a fibrous substance. In addition, the composition of the present invention may contain one or more fibrous substances other than the cellulose together with the cellulose, as the fibrous substance; but the content of the above described cellulose based on the total amount of the fibrous substances contained in the composition of the present invention is, for example, 60 wt% or more, is particularly preferably 70 wt% or more, is most preferably 80 wt% or more, and is especially preferably 90 wt% or more; and the content of the fibrous substance other than the above described cellulose based on the total amount of the fibrous substance contained in the composition of the present invention is, for example, 40 wt% or less, is particularly preferably 30 wt% or less, is most preferably 20 wt% or less, and is especially preferably 10 wt% or less. When the composition of the present invention contains the above described cellulose in the above described range, the composition can provide a three-dimensional molded article particularly excellent in the mechanical strength, by being solidified.

The composition of the present invention contains a fibrous substance as a solid component (or nonvolatile component). The composition of the present invention may contain one or more types of other solid components (hereinafter occasionally referred to as "non-fibrous substance"), in addition to the fibrous substance, as the solid component. The non-fibrous substance (for example, diamond or the like) has a property of being adsorbed to the fibrous substance, and accordingly, it is possible to impart characteristics that the above described non-fibrous substance has, to the three-dimensional molded article to be obtained, by the addition of a non-fibrous substance. In addition, the composition of the present invention may contain a liquid component (or volatile component), in addition to the solid component.

The three-dimensional molded article can be also produced virtually only by the fibrous substances; and can also contain the fibrous substance as a main constituent component, or can also contain the fibrous substance as a secondary constituent component.

When the three-dimensional molded article is produced virtually only with the fibrous substance, the content of a fibrous substance (for example, cellulose, preferably the above described hydroxyl-rich cellulose) based on the total solid components contained in the composition of the present invention is preferably 90 wt% or more, is more preferably 95 wt% or more, and is further preferably 99 wt% or more. Due to the content of the fibrous substance, which has been set in such a range, a three-dimensional molded article that has characteristics derived from the fibrous substance can be obtained.

When the three-dimensional molded article is produced which contains the fibrous substance as the main constituent component, the content of a fibrous substance

(for example, cellulose, preferably the above described hydroxyl-rich cellulose) based on the total solid components contained in the composition of the present invention is preferably 50 to 90 wt%, is more preferably 55 to 85 wt%, and is further preferably 60 to 80 wt%. Due to the content of the fibrous substance, which has been set in such a range, a three-dimensional molded article that has both characteristics derived from the fibrous substance and the non-fibrous substance can be obtained.

When the three-dimensional molded article is produced which contains the fibrous substance as the secondary constituent component, the content of a fibrous substance (for example, cellulose, preferably the above described hydroxyl-rich cellulose) based on the total solid components contained in the composition of the present invention is preferably 0.1 to 50 wt%, is more preferably 1 to 40 wt%, and is further preferably 10 to 30 wt%. Due to the content of the fibrous substance, which has been set in such a range, a three-dimensional molded article that has characteristics mainly derived from the non-fibrous substance, while retaining characteristics derived from the fibrous substance can be obtained.

When the composition of the present invention contains a solvent which will be described later as the constituent component, it is preferable for the content of a fibrous substance (for example, cellulose, preferably the above described hydroxyl-rich cellulose) to be, for example, 15 to 50 wt% of the total amount of the three-dimensional molding composition, from a point that the composition is excellent in the dispersibility of the fibrous substance and in the retainability of the shape and/or structure of the three-dimensional molding composition which has been discharged into a three-dimensional shape, is more preferable to be 15 to 45 wt%, is particularly preferable to be 15 to 40 wt%, and is most preferable to be 20 to 35 wt%.

(Non-fibrous substance)

Examples of the materials of the above described non-fibrous substances include: the same materials as the fibrous substances; in addition, adhesive components having adhesiveness such as starches, pastes, adhesives and pressure-sensitive adhesives; organic materials such as synthetic resins, natural polymers and organic pigments; and inorganic materials which include inorganic pigments, silica, alumina, zeolite, carbon black, metal oxides such as titanium oxide and iron oxide, metal hydroxides such as magnesium hydroxide and aluminum hydroxide, metal nitrides such as silicon nitride and aluminum nitride, metal carbonates such as magnesium carbonate and calcium carbonate, metal sulfates such as magnesium sulfate and calcium sulfate, metal phosphates such as magnesium phosphate and calcium phosphate, clay, gravel, silica, concrete, cement and diamond.

Examples of the above described non-fibrous substances in consideration of the functional aspect include: for example, reinforcing materials, dispersants, surfactants, lubricants, humectants, antiseptics, antibacterial agents, antioxidants, ultraviolet absorbers, pH adjusters, defoaming agents, colorants, electroconductive materials, semiconductor materials, dielectric materials, insulating materials, metal nanoparticles, medicines, agricultural chemicals, supplements and foodstuffs.

The shape of the above described non-fibrous substance can be appropriately selected according to the shape and content of the fibrous substance which is contained in the composition.

When a three-dimensional molded article is produced which contains the fibrous substance as a main constituent component, it is preferable that an average diameter D' of the non-fibrous substance be the average length L of the fibrous substance or less. Due to the average diameter D' of the non-fibrous substance, which has been set in such a range, the composition can reduce the frequency with which the non-fibrous substances become adjacent to each other in the three-dimensional molded article, and can make the mechanical strength of the three-dimensional molded article excellent.

When a three-dimensional molded article is produced which contains the fibrous substance as a secondary constituent component, it is preferable that an average diameter D' of the non-fibrous substance be approximately equal to or less than the average diameter D of the fibrous substance. Due to the average diameter D' of the non-fibrous substance, which has been set in such a range, a three-dimensional molded article such that the basic skeleton of the shape and/or structure of the three-dimensional molded article is formed from the fibrous substance and that the non-fibrous substance attaches to the basic skeleton can be obtained. Alternatively, a three-dimensional molded article such that the basic skeleton of the shape and/or structure of the three-dimensional molded article is formed from the non-fibrous substance and that the fibrous substance reinforces the basic skeleton can be obtained.

(Liquid component: solvent)

The composition of the present invention can contain one or more arbitrary solvents of which the viscosities are relatively low, as a liquid component. Examples of the above described solvents include water, an organic solvent, and mixtures thereof.

Examples of the above described organic solvents include: alcohols such as methanol, ethanol and propanol; polyols such as ethylene glycol and propylene glycol; alkylene glycol alkyl ethers such as ethylene glycol monomethyl ether and propylene glycol diethyl ether; organic acid esters such as ethyl acetate, methyl propanoate and butyl butyrate; aromatic hydrocarbons such as benzene, toluene and xylene; and ketones such as acetone, methyl ethyl ketone and acetyl acetone.

In the case where the composition of the present invention contains a hydrophilic fibrous substance such as cellulose as the fibrous substance, it is preferable to use water or an organic solvent of which the polarity is high such as alcohols, from the viewpoint that the hydrophilic fibrous substance shows excellent dispersibility therein.

When the composition of the present invention contains a solvent, adjacent fibrous substances are retained in the state of being in contact with each other due to hydrogen bonding with the solvent or due to thickening. Because of this, when the composition is discharged with the use of the discharge device, the composition can prevent the scattering and local agglomeration of the fibrous substance and other additive components, and can enhance the workability in the production of the three-dimensional molded article.

When the composition contains a solvent as a constituent component, it is preferable for the sum of the content of a fibrous substance (for example, cellulose, preferably the above described hydroxyl-rich cellulose) and the solvent to be, for example, 70 wt% or more of the total amount of the three-dimensional molding composition, is more preferable to be 80 wt% or more, is particularly preferable to be 90 wt% or more, and is most preferable to be 95 wt% or more. Incidentally, the upper limit is 100 wt%.

In addition, it is preferable for the content of the solvent in the composition of the present invention to be, for example, 1 part by weight or more per 1 part by weight of a fibrous substance (for example, cellulose, preferably the above described hydroxyl-rich cellulose), in a point that the composition is excellent in the dispersibility for the cellulose, is more preferable to be 1.3 parts by weight or more, is further preferable to be 1.5 parts by weight or more, and is particularly preferable to be 1.8 parts by weight or more. In addition, it is preferable for the content of the solvent to be, for example, 10 parts by weight or less per 1 part by weight of a fibrous substance (for example, cellulose, preferably, the above described hydroxyl-rich cellulose), in a point that the composition is excellent in the retainability of the shape and/or structure of the three-dimensional molding composition which has been discharged into a three-dimensional shape, is more preferable to be 5 parts by weight or less, is further preferable to be 3 parts by weight or less, and is particularly preferable to be 2.5 parts by weight or less.

The content of the solvent in the composition of the present invention can be appropriately adjusted in a range in which the composition has both the dispersibility for the fibrous substance and the discharge properties of the composition. From the viewpoint that the composition retains the shape and/or structure of the three-dimensional molding composition which has been discharged into the three-dimensional shape, it is preferable for the content of the solvent in the composition to be 95 wt% or less, is more preferable to be 90 wt% or less, is further preferable to be 85 wt% or less, is further preferable to be 80 wt% or less, is further preferable to be 75 wt% or less, is further preferable to be 70 wt% or less, is further preferable to be 60 wt% or less, and is most preferable to be 50 wt% or less. On the other hand, from the viewpoint that the composition improves the dispersibility for the fibrous substance and the application properties of the composition, it is preferable for the content of the solvent in the composition to be 50 wt% or more, is more preferable to be 60 wt% or more, and is further preferable to be 65 wt% or more.

It is preferable for the content of the solvent in the composition of the present invention to be 50 to 85 wt%, in a point that the composition retains the shape and/or structure of the three-dimensional molding composition which has been discharged into the three-dimensional shape, and is also excellent in in the dispersibility for the fibrous substance and the discharge properties, is more preferable to be 60 to 80 wt%, is further preferable to be 60 to 75 wt%, and is particularly preferable to be 60 to 70 wt%.

The composition of the present invention has high thixotropy, and accordingly is excellent in the discharge properties at the time when being discharged with the use of the discharge device. In addition, the composition can retain the three-dimensional shape which has been formed by the discharge, without breaking the shape, until being solidified after having been discharged. Because of this, the composition is suitable for use in producing a three-dimensional molded article with the use of the discharge device, and can be suitably used, for example, as a three-dimensional molding ink which is used in an ink-jet method, specifically, an ink which is used in a method of obtaining the three-dimensional molded article by discharging the ink from a nozzle of an ink-jet printer into a three-dimensional shape, and solidifying the composition which has been discharged into a three-dimensional shape.

[Method for producing three-dimensional molded article]

A method for producing the three-dimensional molded article according to the present invention includes: discharging the above described three-dimensional molding composition into a three-dimensional shape with the use of the discharge device or by a method involving an application of a shear stress to the composition (step 1); and solidifying the discharged three-dimensional molding composition (step 2) to produce the three-dimensional molded article.

The step 1 is a step of discharging the composition of the present invention with the use of the discharge device into a three-dimensional shape. The discharge device is not limited in particular, and for example, an ink-jet printer, a dispenser, a syringe or the like can be appropriately selected and used according to the shape and structure of a desired three-dimensional molded article.

When the composition is discharged with the use of the above described discharge device, the discharge method is not limited in particular, and the discharge can be performed intermittently or continuously. In addition, the discharge can be performed in combination of these methods. For example, in the case where a discharge device is used which has two or more discharge ports, it is possible to intermittently discharge ink from one discharge port and continuously discharge ink from another discharge port.

The shape of the discharge port is not limited in particular, and includes, for example, an injection port in injection molding, an extrusion port in extrusion molding, an ink-jet nozzle in an ink-jet printer, or shapes similar to those of the ports or nozzles.

A diameter of the discharge port can be arbitrarily set. In the case where the diameter of the discharge port is used, which is narrower than the length of the fibrous substance, the fibrous substance is oriented in the discharge direction when the composition is discharged, and a three-dimensional molded article can be obtained which has a fixed fiber orientation. In addition, a guide for aligning the orientation of the fibrous substance may be provided on an inner wall of the discharge port. In the case, it is preferable that the length of the discharge port be sufficiently long as compared with the length of the fibrous substance.

A driving force for the discharge is not limited in particular, and at least one type of force can be used, which is selected from the group consisting, for example, of pressurization, depressurization and gravity.

Methods for discharging the composition of the present invention into a three-dimensional shape include: a method for discharging the composition to a region programmed as 3D data; and a method for discharging the composition into a region determined by a base material (for example, mold) which guides the shape and/or structure of the three-dimensional molded article.

The composition of the present invention contains the fibrous substance, and the fibrous substance has the following features: a surface area is comparatively large with respect to its volume; and a length is comparatively long with respect to its diameter. Because of this, the adjacent fibrous substances can retain its shape corresponding to a predetermined region, by coming in contact with each other by using its surface area and length. Because of this, the three-dimensional molding composition which has been discharged into a three-dimensional shape is retained without breaking its shape.

By the discharge method as described above being adopted, the composition of the present invention can be effectively used without waste, and the cost of the raw material can be suppressed to a minimum.

The step 2 is a step of solidifying the three-dimensional molding composition which has been discharged into the three-dimensional shape in step 1.

When the composition of the present invention contains a solvent, the three-dimensional molding composition which has been discharged into a three-dimensional shape can be solidified by the removal of the solvent therefrom, and the three-dimensional molded article can be obtained which is a solidified product of the composition of the present invention.

The methods of removing the solvent are not limited in particular, and include methods such as heating, depressurization and air blowing. It is possible to arbitrarily select: a heating temperature and a heating time period; a degree of depressurization and a depressurization time period; and an amount of blowing air, a speed of blowing air, a temperature of blowing air, the type and degree of dryness of air to be blown, a region to be blown, a direction of blown air, and the like.

In the case where the solvent is removed by sudden depressurization, the three-dimensional molding composition which has been discharged into the three-dimensional shape expands due to the expand of the solvent, and consequently, a three-dimensional molded article can be obtained that is larger than the three-dimensional molding composition which has been discharged into the three-dimensional shape.

When the composition of the present invention contains a solvent, by the solidification of the composition of the present invention, the solvent is removed from spaces among adjacent fibrous substances in the composition, and the surface area on which or frequency with which the adjacent fibrous substances come into contact with each other significantly increases; and thereby the contact state changes to a bonded state (or a state in which the degree of contact is enhanced). Thereby, the shape is firmly retained, and a three-dimensional molded article having excellent mechanical strength can be obtained.

For example, when the composition of the present invention contains cellulose as a fibrous substance and contains a solvent, the surface of the cellulose in the composition becomes a state of being activated by the solvent, and after that, when the solvent has been removed, the activated hydroxyl groups of adjacent cellulose are strongly bonded by hydrogen bonding to each other; and a three-dimensional molded article excellent in mechanical strength can be obtained. In particular, when the composition contains a hydroxyl-rich cellulose as the fibrous substance, the hydrogen bond is densely formed, and accordingly a three-dimensional molded article can be obtained which has particularly high mechanical strength. Because of this, if the composition of the present invention is used, a three-dimensional molded article excellent in the mechanical strength can be formed, even without adopting a method of producing the three-dimensional molded article by molding a three-dimensional molded article in each layer, and adhering the layers to each other with the use of a binding agent.

In addition, when the three-dimensional molding composition is solidified which has been discharged into the three-dimensional shape, the composition may be pressurized moderately. The contact area and contact frequency of the adjacent cellulose can be further increases by the pressurization, the hydrogen bonds are formed at a higher degree, and thereby a three-dimensional molded article tends to be obtained which has extremely excellent mechanical strength. A degree of pressurization is not limited in particular, and can be appropriately adjusted according to the application. For example, when a three-dimensional molded article is desired which has a high porosity or a low mechanical strength, it is preferable to lower the degree of pressurization; and when a three-dimensional molded article is desired which has a low porosity or a high mechanical strength, it is preferable to enhance the degree of the pressurization. In addition, also the pressurizing method is not limited in particular.

The step 1 and the step 2 may be carried out sequentially in this order, or may be carried out simultaneously. For example, in the case where a method of discharging the composition of the present invention into a closed container has been used which has been heated and depressurized, and in which air is blown, the solidification progresses almost simultaneously with discharge, and the three-dimensional molded article can be obtained.

The step 1 and the step 2 may be carried out in an environment in which at least one condition selected from temperature, humidity and pressure is set constant, or in an environment in which the condition is set so as to change continuously or intermittently.

In addition, two or more of the three-dimensional molded articles which have been obtained through the step 2 may be adhered by an adhesive component, and a three-dimensional molded article different from the original three-dimensional molded article may be formed. When the adhesive component is a thermosetting component or a photosetting component, the three-dimensional molded article can be firmly adhered by an operation of curing the adhesive component by heating or light irradiation after discharge.

[Three-dimensional molded article]

The three-dimensional molded article of the present invention is formed of a solidified product of the above described composition. The three-dimensional molded article of the present invention is produced, for example, by the above described method for producing the three-dimensional molded article.

The shape, structure and size of the three-dimensional molded article of the present invention are not limited in particular.

In addition, the three-dimensional molded article of the present invention may be an article in which two or more three-dimensional molded articles are bonded to each other via an adhesive layer. Specifically, in the three-dimensional molded article of the present invention, a layer which is formed by the solidified product of the composition of the present invention and two or more layers of the adhesive layers may form a laminated structure, but it is preferable for a ratio of the layer formed of the solidified product of the composition of the present invention occupying in the total volume of the three-dimensional molded article to be 80% by volume or more, is more preferable to be 90% by volume or more, and is further preferable to be 95% by volume or more.

The three-dimensional molded article of the present invention contains a fibrous substance (preferably cellulose, and particularly preferably cellulose of which the average degree of unsubstitution of hydroxyl groups is 2.5 or more) as a constituent component thereof, and a ratio of the above described fibrous substance occupying in the total amount of the three-dimensional molded article is, for example, 50 wt% or more, is preferably 60 wt% or more, is more preferably 70 wt% or more, is particularly preferably 80 wt% or more, is most preferably 90 wt% or more, and is especially preferably 95 wt% or more. Because of this, it is lightweight. In addition, when the fibrous substance is the cellulose in particular, the three-dimensional molded article is lightweight, is excellent in safety, is carbon-neutral and is environmentally friendly.

The three-dimensional molded article of the present invention is suitable, for example, as: artifacts such as dolls and models; members for precision equipment such as electric and electronic equipment; materials for civil engineering and construction, for fixed constructions such as houses, buildings, roads and bridges; structural members for transporting equipment such as automobiles, trains, ships and aircrafts; functional processed products such as medicines, agricultural chemicals, supplements and foodstuffs; and preproduction prototypes of these applications.

Examples

Hereinafter, the present invention will be described in more detail with reference to examples, but the present invention is not limited to these examples.

Example 1

A three-dimensional molded article 1 ( = three-dimensional molding composition which was discharged into three-dimensional shape) and a three-dimensional molded article 2 ( = solidified product of three-dimensional molding composition which was discharged into three-dimensional shape) were produced according to the following procedure, by using "CELISH PC110S" manufactured by Daicel FineChem, Ltd. as the three-dimensional molding composition.
The "CELISH PC110S" contains 35% of solid component (= Microfibrillated Cellulose ; average degree of unsubstitution of the hydroxyl groups : 3.0, average length : 600 $\mu$m, average aspect ratio :600) and 65% of water ,and a TI value [viscosity at 6 rpm/viscosity at 60 rpm] of 1% aqueous dispersion of which at 20°C is 4.2.
Firstly, a mold frame (inner frame length 40 mm $\times$ inner frame width 20 mm $\times$ inner frame height 4 mm) was mounted on a supporting substrate, and the above described three-dimensional molding composition was discharged into and filled in the above described mold frame, with the use of a syringe (diameter of discharge port of 5 mm), and the three-dimensional molded article 1 was obtained.
Next, a weight (length 40 mm $\times$ width 20 mm, and weight of 10 g) was mounted on the above described three-dimensional molded article 1, and the solvent was removed in a heating and drying oven (50°C $\times$ 24 hours), then the above described mold frame and weight were removed, and the three-dimensional molded article 2 was obtained.
The obtained three-dimensional molded article 2 had high shape accuracy. The obtained three-dimensional molded article 2 had also a high mechanical strength, and even when having been naturally dropped onto a polypropylene plate (thickness of 1 cm) from a height of 10 cm, its three-dimensional shape was maintained without being broken.

Example 2

A three-dimensional molded article 1 and a three-dimensional molded article 2 were obtained in a similar way to those in Example 1, except that a mixture of CELISH PC110S (100 parts by weight) and silica gel "Nipsil E-200 A" (manufactured by Tosoh Corporation, 10 parts by weight) as a non-fibrous substance was used as a three-dimensional molding composition. The obtained three-dimensional molded article 2 had a high shape accuracy and high mechanical strength of an approximately same level as that of the three-dimensional molded article 2 obtained in Example 1.

Example 3

A three-dimensional molded article 1 and a three-dimensional molded article 2 were obtained in a similar way to those in Example 1, except that a mixture of CELISH PC110S (100 parts by weight) and polyvinylpyrrolidone (weight average molecular weight of 50,000, 10 parts by weight) as a adhesive component was used as a three-dimensional molding composition. The obtained three-dimensional molded article 2 had a high shape accuracy and high mechanical strength of an approximately same level as that of the three-dimensional molded article 2 obtained in Example 1.

Example 4

A three-dimensional molded article 1 and a three-dimensional molded article 2 were produced with the use of the same three-dimensional molding composition as that in Example 1, according to the following procedure.
Firstly, a base material (length 80 mm $\times$ width 10 mm $\times$ thickness 2 mm) was mounted on a supporting substrate, and the three-dimensional molding composition was discharged onto the above described base material with the use of a syringe (diameter of discharge port of 5 mm) so as to be semicylindrically arranged thereon; and the three-dimensional molded article 1 was obtained.
Next, the solvent of the three-dimensional molded article 1 was removed in a heating and drying oven (50°C $\times$ 24 hours), and the three-dimensional molded article 2 was obtained. The obtained three-dimensional molded article 2 had a high shape accuracy and high mechanical strength of an approximately same level as that of the three-dimensional molded article 2 obtained in Example 1.

Example 5

A three-dimensional molded article 2 was produced with the use of the same three-dimensional molding composition as that in Example 1, according to the following procedure.

A mold frame (inner frame length 40 mm × inner frame width 20 mm × inner frame height 4 mm) was mounted on a supporting substrate, and the above described three-dimensional molding composition was discharged into and filled in the above described mold frame, with the use of a syringe (diameter of discharge port of 5 mm), and at approximately the same time, hot air was blown against the discharged three-dimensional molding composition to remove the solvent; and the three-dimensional molded article 2 was obtained. The obtained three-dimensional molded article 2 had a high shape accuracy and high mechanical strength of an approximately same level as that of the three-dimensional molded article 2 obtained in Example 1.

Example 6

A three-dimensional molded article 1 and a three-dimensional molded article 2 were obtained in a similar way to those in Example 1, except that a mixture was used which was obtained by mixing CELISH PC110S (100 parts by weight) and 10% sodium hydroxide aqueous solution (20 parts by weight) to convert at least a part of the hydroxyl groups in the contained cellulose into a sodium salt, as a three-dimensional molding composition.

The obtained three-dimensional molded article 2 had a high shape accuracy equivalent to that of the three-dimensional molded article 2 obtained in Example 1, but the mechanical strength was low, and when having been naturally dropped onto a polypropylene plate (thickness of 1 cm) from a height of 10 cm, its three-dimensional shape was broken.

As a summary of the above description, the constitution and variation of the present invention will be additionally described below.

[1] A three-dimensional molding composition including a fibrous substance as a constituent component, wherein a TI value [viscosity at 6 rpm/viscosity at 60 rpm] at 20°C is 1.5 or more.

[2] The three-dimensional molding composition according to [1], wherein the fibrous substance is cellulose.

[3] The three-dimensional molding composition according to [1], wherein the fibrous substance is cellulose of which an average degree of unsubstitution of hydroxyl groups is 2.5 or more.

[4] The three-dimensional molding composition according to any one of [1] to [3], wherein an average length of the fibrous substance (preferably cellulose, and particularly preferably cellulose of which the average degree of unsubstitution of hydroxyl groups is 2.5 or more) is 1 to 1,000 μm, and an average aspect ratio thereof is 10 to 10,000.

[5] The three-dimensional molding composition according to any one of [1] to [4], further including a solvent as the constituent component, wherein a sum of a content of the fibrous substance and a content of the solvent is 70 wt% or more of a total amount of the three-dimensional molding composition, and a content of the fibrous substance is 15 to 50 wt% of the total amount of the three-dimensional molding composition.

[6] The three-dimensional molding composition according to [5], wherein a content of the solvent per part by weight of the fibrous substance is 1 to 10 parts by weight.

[7] The three-dimensional molding composition according to any one of [1] to [6], wherein the content of the fibrous substance (preferably cellulose, and particularly cellulose of which the average degree of unsubstitution of hydroxyl groups is 2.5 or more) is 90 wt% or more based on a total solid component which is contained in the three-dimensional molding composition.

[8] A three-dimensional molding composition including cellulose as a constituent component, wherein an average degree of unsubstitution of hydroxyl groups in the cellulose is 2.5 or more.

[9] The three-dimensional molding composition according to [8], wherein an average length of the cellulose of which the average degree of unsubstitution of hydroxyl groups is 2.5 or more is 1 to 1,000 μm, and an average aspect ratio thereof is 10 to 10,000.

[10] The three-dimensional molding composition according to [8] to [9], further comprising a solvent as a constituent component, wherein a sum of a content of the cellulose of which an average degree of unsubstitution of hydroxyl groups is 2.5 or more and a content of the solvent is 70 wt% or more of a total amount of the three-dimensional molding composition, and the content of the cellulose of which the average degree of unsubstitution of hydroxyl groups is 2.5 or more is 15 to 50 wt% of the total amount of the three-dimensional molding composition.

[11] The three-dimensional molding composition according to any one of [8] to [10], wherein the content of the solvent per part by weight of the cellulose of which the average degree of unsubstitution of hydroxyl groups is 2.5 or more is 1 to 10 parts by weight.

[12] The three-dimensional molding composition according to any one of [8] to [11], wherein the content of the cellulose of which the average degree of unsubstitution of hydroxyl groups is 2.5 or more based on a total solid component that is contained in the three-dimensional molding composition is 90 wt% or more.

[13] A method for producing a three-dimensional molded article including: discharging the three-dimensional molding composition according to any one of [1] to [12] into a three-dimensional shape by use of a discharge device; and then solidifying the discharged three-dimensional molding composition to thereby produce the three-dimensional molded article.

[14] A three-dimensional molded article that is formed of a solidified product of the three-dimensional molding composition according to any one of [1] to [12].

[15] The three-dimensional molded article according to [14], wherein a ratio of the fibrous substance (preferably cellulose, and particularly preferably cellulose of which the average degree of unsubstitution of hydroxyl groups is 2.5 or more) occupying in the total amount of the three-dimensional molded article is 50 wt% or more.

[16] A three-dimensional molding composition that is used for a production of a three-dimensional molded article by intermittently and/or continuously discharging a composition, including a fibrous substance as a constituent component.

[17] The three-dimensional molding composition according to [16], wherein the fibrous substance is any one selected from the group consisting of polysaccharides, derivatives of polysaccharides, polysaccharides which have formed salts, and derivatives of polysaccharide which have formed salts.

[18] The three-dimensional molding composition according to [16] or [17], wherein the polysaccharide is cellulose.

[19] The three-dimensional molding composition according to [16] or [17], wherein an average length (average length L) of the fibrous substance is 1 to 1,000 $\mu$m.

[20] The three-dimensional molding composition according to [16] or [17], wherein an average thickness (average diameter D) of the fibrous substance is 1 to 10,000 nm.

[21] The three-dimensional molding composition according to [16] or [17], wherein a content of a liquid component in the composition is 50 wt% or more.

[22] The three-dimensional molding composition according to [16] or [17], wherein the content of the liquid component in the composition is less than 50 wt%.

[23] The three-dimensional molding composition according to [16] or [17], wherein the content of the fibrous substance based on the total solid component contained in the composition is 90 wt% or more.

[24] A method for producing a three-dimensional molded article by a method of intermittently and/or continuously discharging a composition, wherein the composition contains a fibrous substance as a constituent component.

[25] The production method according to [24], wherein the three-dimensional molding composition according to [16] is used as the composition.

[26] The production method according to [24], wherein the discharging method is a method of discharging the composition with the use of a device having one or two or more discharge ports.

[27] The production method according to [26], wherein a guide is provided on an inner wall of the discharge port.

[28] The production method according to [24], wherein a driving force for discharging is any one force or a combination of two or more forces which are selected from the group consisting of pressurization, depressurization and gravity.

[29] The production method according to [24], wherein the composition is discharged to a region that has been previously determined by a base material which guides a shape and/or structure of the three-dimensional molded article.

[30] The production method according to [24], wherein a device is used that controls the discharge on the basis of a predetermined computer program which has been created in advance.

[31] The production method according to [24], wherein the production is carried out in an environment that is statically and/or dynamically adjusted according to any one or two or more conditions which are selected from the group consisting of heating, cooling, humidification, drying, pressurization and depressurization.

[32] A three-dimensional molded article including a fibrous substance as a constituent component, wherein a ratio of a part which is composed of a laminated structure occupying in the total volume of the three-dimensional molded article is less than 80% by volume.

Industrial Applicability

A three-dimensional molding composition can simply produce a three-dimensional molded article excellent in a shape accuracy and mechanical strength, by a short step, by being discharged and solidified into a shape of a desired three-dimensional molded article. In addition, the obtained three-dimensional molded article has high mechanical strength, and also is excellent in terms of resources, environment and safety because cellulose is used as a raw material; and is suitable as artifacts, members for precision equipment, materials for civil engineering and construction, structural members for transporting equipment, and functional processed products.

**Claims**

1.  A three-dimensional molding composition comprising a fibrous substance as a constituent component, wherein a TI value [viscosity at 6 rpm/viscosity at 60 rpm] at 20°C is 1.5 or more.

2.  The three-dimensional molding composition according to claim 1, wherein the fibrous substance is cellulose.

3.  The three-dimensional molding composition according to claim 1, wherein the fibrous substance is cellulose of which an average degree of unsubstitution of hydroxyl groups is 2.5 or more.

4.  The three-dimensional molding composition according to any one of claims 1 to 3, wherein an average length of the fibrous substance is 1 to 1,000 $\mu$m and an average aspect ratio thereof is 10 to 10,000.

5.  The three-dimensional molding composition according to any one of claims 1 to 4, further comprising a solvent as the constituent component, wherein a sum of a content of the fibrous substance and a content of the solvent is 70 wt% or more of a total amount of the three-dimensional molding composition, and the content of the fibrous substance is 15 to 50 wt% of the total amount of the three-dimensional molding composition.

6.  The three-dimensional molding composition according to any one of claims 1 to 5, wherein a content of the fibrous substance based on a total solid component contained in the three-dimensional molding composition is 90 wt% or more.

7.  A three-dimensional molding composition comprising cellulose as a constituent component, wherein an average degree of unsubstitution of hydroxyl groups in the cellulose is 2.5 or more.

8.  A method for producing a three-dimensional molded article, comprising: discharging the three-dimensional molding composition according to any one of claims 1 to 7 into a three-dimensional shape by using a discharge device; and then solidifying the discharged three-dimensional molding composition to thereby produce the three-dimensional molded article.

9.  A three-dimensional molded article that is formed of a solidified product of the three-dimensional molding composition according to any one of claims 1 to 7.

## INTERNATIONAL SEARCH REPORT

| International application No. |
| --- |
| PCT/JP2017/037241 |

### A. CLASSIFICATION OF SUBJECT MATTER
Int.Cl. B29C64/307(2017.01)i, B33Y40/00(2015.01)i

According to International Patent Classification (IPC) or to both national classification and IPC

### B. FIELDS SEARCHED
Minimum documentation searched (classification system followed by classification symbols)
Int.Cl. B29C64/307, B33Y40/00

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2015-212060 (SEIKO EPSON CORPORATION) 26 November 2015, claim 2 (Family: none) | 1-9 |
| Y | WO 2015/180844 A1 (BORREGAARD AS) 03 December 2015, page 2, lines 15-24, page 14, lines 1-13 & JP 2017-516926 A | 1-9 |

☐ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 November 2017 | 28 November 2017 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016204840 A
- JP 2003053847 A
- JP 2015212060 A